Europäisches Patentamt

European Patent Office

Office européen des brevets

(19)

(11) **EP 0 611 348 B1**

(12) **EUROPÄISCHE PATENTSCHRIFT**

(45) Veröffentlichungstag und Bekanntmachung des Hinweises auf die Patenterteilung:
**02.10.1996 Patentblatt 1996/40**

(21) Anmeldenummer: 93917691.3

(22) Anmeldetag: **29.07.1993**

(51) Int. Cl.$^6$: **B60T 8/32**

(86) Internationale Anmeldenummer:
**PCT/EP93/02023**

(87) Internationale Veröffentlichungsnummer:
**WO 94/06657 (31.03.1994 Gazette 1994/08)**

(54) **VERFAHREN ZUR KURVENFAHRTERKENNUNG**

PROCESS FOR CORNERING IDENTIFICATION

PROCEDE D'IDENTIFICATION DE VIRAGE

(84) Benannte Vertragsstaaten:
**DE FR GB NL**

(30) Priorität: **11.09.1992 DE 4230481**

(43) Veröffentlichungstag der Anmeldung:
**24.08.1994 Patentblatt 1994/34**

(73) Patentinhaber: **ITT Automotive Europe GmbH
D-60488 Frankfurt am Main (DE)**

(72) Erfinder:
• **HEYN, Harald
D-60316 Frankfurt/Main (DE)**

• **GRONAU, Ralph
D-35083 Wetter (DE)**
• **BUSCHMANN, Gunther
D-65510 Idstein (DE)**
• **STRIEGEL, Thomas
D-65835 Lieberbach (DE)**

(74) Vertreter: **Blum, Klaus-Dieter, Dipl.-Ing.
c/o ALFRED TEVES GMBH
Guerickestrasse 7
60488 Frankfurt (DE)**

(56) Entgegenhaltungen:
**DE-A- 3 718 421          DE-A- 3 726 998
DE-A- 4 018 495          DE-C- 3 127 302**

## Beschreibung

Die Erfindung bezieht sich auf ein insbesondere für Kraftfahrzeuge mit Blockierschutz- und/oder Antriebsschlupfregelung vorgesehenes Verfahren zur Kurvenfahrterkennung, bei dem fortlaufend eine vom Unterschied des Reifen-Abrollumfangs abhängige Korrekturgröße ermittelt wird, bei dem unter Berücksichtigung dieser Korrekturgröße die Geschwindigkeitsdifferenz der beiden Rädern erfaßt wird und bei dem die Geschwindigkeitsdifferenz zur Kurvenfahrterkennung ausgewertet wird.

Eine Kurvenfahrterkennung ist z.B. zur Verbesserung einer Blockierschutz- oder Antriebschlupfregelung von Nutzen. Bei solchen Regelungssystemen werden im allgemeinen die für die Regelung benötigten Informationen allein aus dem Drehverhalten der einzelnen Räder abgeleitet. Nun gibt es jedoch Situationen, in denen die Radsignale nicht eindeutig sind. Beim geregelten Bremsen auf µ-split-Fahrbahnen (unterschiedlicher Reibbeiwert rechts/links) und beim Bremsen in der Kurve, wenn durch die Fliehkraft die Radlastunterschiede Kurven-innen/-außen groß werden, treten sehr ähnliche Radverläufe auf. Während jedoch auf µ-split-Fahrbahnen zur Vermeidung hoher Giermomente der Druckaufbaugradient auf der Seite des höheren Reibbeiwertes abgeflacht werden muß, kann eine gleichartige Maßnahme beim Bremsen in der Kurve zu übersteuerndem Fahrzeugverhalten und zu eine Verlängerung des Bremsweges führen. Eine Giermomentenbeeinflussung sollte folglich bei den Bremsvorgängen in der Kurve abgeschaltet oder geändert werden.

Aus der DE 37 18 421 A1 ist bereits eine Schaltungsanordnung bekannt, bei der zur Erkennung der Kurvenfahrt die Geschwindigkeitsdifferenz der beiden Räder einer Achse ausgewertet wird. Diese Schaltungsanordnung enthält außerdem Schaltkreise zur Erzeugung eines systembedingten, von der momentanen Kurvenfahrt unabhängigen Fehler-Korrektursignals, das im wesentlichen durch Filterung des normierten Geschwindigkeitsdifferenzsignals mit unterschiedlichen Zeitkonstanten gewonnen wird; beim Erkennen der Kurvenfahrt wird die bei Geradeausfahrt geltende Zeitkonstante von etwa 30-120 s auf ein Zeitkonstante von etwa 150-300 s angehoben.

Eine Kurvenfahrt-Erkennungseinrichtung für eine Vortriebsregelungsschaltung ist in der DE 31 27 302 C2 beschrieben. Die Kurvenfahrterkennung beruht allein auf der Messung der Drehzahldifferenz zwischen den beiden nicht angetriebenen Rädern. Drehzahldifferenzen aufgrund von unterschiedlichen Abrollumfängen oder dergleichen führen bei dieser bekannten Schaltung zwangsläufig zu fehlerhafter Verschiebung der Ansprechschwellen.

Der Erfindung liegt daher die Aufgabe zugrunde, ein Verfahren zu entwickeln, mit dem bei der Auswertung der das Raddrehverhalten wiedergebenden Signale in zuverlässiger Weise und unabhängig von eventuellen Unterschieden der Reifen-Abrollumfänge eine Kurvenfahrt-Situation von einer Geradeausfahrt unterschieden werden kann.

Es hat sich gezeigt, daß diese Aufgabe durch das im beigefügten Anspruch 1 beschriebenen Verfahren gelöst werden kann.

Das Besondere des erfindungsgemäßen Verfahrens besteht also darin, daß eine die Geradeausfahrt wiedergebende Bezugsgröße gebildet wird, daß diese Bezugsgröße in Abhängigkeit von der korrigierten und bewerteten Geschwindigkeitsdifferenz zwischen den beiden Rädern einer Achse nach einem vorgegebenen Zeitschema oder Zeitraster fortlaufend korrigiert wird und daß zur Kurvenfahrterkennung diese Geschwindigkeitsdifferenz bzw. Differenzgröße mit dem momentanen Wert der Bezugsgröße verglichen wird.

Durch die fortlaufende Korrektur wird die Richtigkeit bzw. das Maß der Übereinstimmung dieser Bezugsgröße mit einem tatsächlich die Geradeausfahrt kennzeichnenden Wert ständig erhöht. Dies gilt auch bei erheblichen Unterschieden der Reifen-Abrollumfänge, verursacht beispielsweise durch einseitige Abnutzung, durch Montage eines Notrades oder dergl. Mit zunehmender Fahrtzeit wird die Erkennung der Reifenabrollunterschiede immer sicherer.

Nach einem vorteilhaften Ausführungsbeispiel der Erfindung wird die Bezugsgröße anfangs, d.h. nach dem Starten der Kurvenfahrterkennung - ausgelöst z.B. durch das Anlassen des Fahrzeugsmotors - in relativ kurzen Schritten bzw. Zeitspannen korrigiert, die dann mit fortschreitender Fahrtdauer kontinuierlich oder in Stufen verlängert werden.

Die prozentualen Änderungsraten der Bezugsgröße sind nach einen weiteren Ausführungsbeispiel der Erfindung variabel. Anfangs sind die Raten relativ hoch und werden danach in Stufen auf geringere Prozentsätze reduziert. Wenn innerhalb vorgegebener Zeitspannen die Geschwindigkeitsdifferenzen klein sind bzw. keine Korrektur des Bezugswertes erfolgt, werden die Mindestzeiten, nach deren Ablauf eine Korrektur des Bezugswertes möglich ist, erhöht, z.B. einmal oder mehrmals verdoppelt. Gleichzeitig kann die prozentuale Änderungsrate verringert werden, weil offensichtlich bereits ein stabiler Bezugswert, der keiner Korrektur bedarf, erreicht wurde.

Eine weitere Ausführungsart der Erfindung besteht darin, daß die Bezugsgröße mit Hilfe eines Zählers gewonnen wird, der ausgehend von einem Mittelwert die Abweichung der Geschwindigkeitsdifferenz von der Bezugsgröße erfaßt und, sobald die Abweichung einen Grenzwert erreicht und/oder über ein vorgegebenen Zeitspanne hinaus andauert, die Bezugsgröße um ein vorgegebenen prozentualen Wert in Richtung auf eine Verringerung der Abweichung anhebt bzw. absenkt. Solange die Abweichung von dem Bezugswert gleiche Richtung besitzt, wird der Inhalt des Zählers im Zähltakt erhöht bzw. erniedrigt. Beim Erreichen des oberen bzw. unteren Zähler-Endwertes wird dann die Bezugsgröße in Richtung auf eine Annäherung an die Geschwindigkeitsdifferenz korrigiert und der Zähler auf den Ausgangswert (Mittelwert) zurückgesetzt. Stimmen Differenzgröße und Bezugsgröße überein und weicht der Zählereinhalt von dem Ausgangswert (Mittelwert) ab, wird der Zählerinhalt im Arbeitstakt in Richtung Ausgangswert erhöht bzw. erniedrigt. Der Zähltakt ist zweckmäßigerweise variabel und wird, ausgehend von einem anfangs relativ schnellen Takt, mehrmals halbiert, das Zählen also verlangsamt.

Zweckmäßigerweise wird die erfindungsgemäße Kurvenfahrterkennung erst nach Überschreiten eines Schwellwertes der Fahrzeuggeschwindigkeit, beispielsweise nach Überschreiten einer 30 km/h- Schwelle, ausgewertet.

Eine weitere Ausführungsart des Verfahrens nach der Erfindung besteht darin, daß eine oder mehrere zusätzliche Speicher verwendet werden, die die Änderung der Geschwindigkeitsdifferenz bzw. des Gradienten der Geschwindigkeitsdifferenz erfassen und zum schnellen Erkennen von Einlenk- und Auslenkvorgängen, von schnellen Lenkwechselvorgängen usw. dienen.

Diese Informationen lassen sich auf vielfältige Weise zur Verbesserung der Regelung und zur Vermeidung von irritierenden Überwachungssignalen auswerten.

Weiterhin ist es zweckmäßig, die Fahrzeugsgeschwindigkeit oder Fahrzeugreferenzgeschwindigkeit mit der Geschwindigkeit der zur Kurvenfahrterkennung überwachten Räder zu vergleichen und die Kurvenfahrterkennung zu unterbrechen, sobald die Differenz zwischen der Fahrzeug(referenz)geschwindigkeit und dem langsameren Rad einen vorgegebenen Grenzwert überschreitet. Auf diese Weise wird der Vortäuschung einer Kurvenfahrt durch Teilbremsung vorgebeugt. Der zu diesem Zeitpunkt gegebene Kurvenfahrterkennungs-Status wird für die Regelung beibehalten.

Beim Einsetzen einer Blockierschutz- oder Antriebsschlupfregelung wird ebenfalls der zu diesem Zeitpunkt ermittelte Status der Kurvenfahrterkennung bis zur Beendigung dieser Regelphase als konstant angenommen. Eine fälschliche Interpretation des während der Regelung auftretende Schlupfes als Kurvenfahrterkennungssignal wird auf diesem Weg ausgeschlossen.

In den beigefügten Unteranspüchen sind noch weitere zweckmäßige Ausführungsarten der Erfindung beschrieben.

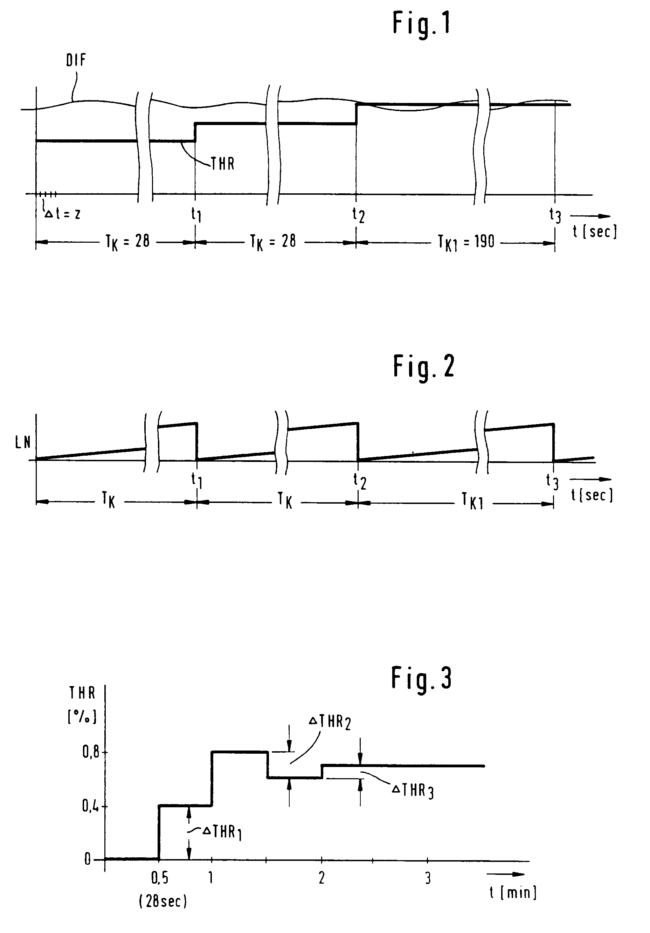

Weitere Merkmale, Vorteile und Anwendungsmöglichkeiten der Erfindung gehen aus der folgenden Beschreibung weitere Details, anhand der beigefügten Diagramme, Fig. 1 bis 6, hervor.

Die folgenden Erläuterungen anhand der Diagramme beziehen sich auf eine blockiergeschützte Bremsanlage bzw. auf ein Antiblockiersystem (ABS) für ein Kraftfahrzeug mit Hinterantrieb. Alle für die Regelung benötigten Informationen werden bei diesem System mit Hilfe von Radsensoren gewonnen.

Die Kurvenfahrterkennung wird bei einem solchen System unter anderem zur Unterscheidung von Fahrsituationen auf μ-split von Kurvenfahrten verwendet. Für das erfindungsgemäße Verfahren wird im vorliegenden Beispiel das Drehverhalten der nicht angetriebenen Vorderräder ausgewertet. Zunächst wird die im Diagramm nach Fig. 1 mit DIF bezeichnete Differenzgröße gebildet, die von der Geschwindigkeitsdifferenz der beiden Vorderräder abgeleitet ist. Speziell wird im vorliegenden Fall die Differenz der K-Faktoren der beiden Vorderräder zur Bildung der Differenzgröße DIF herangezogen. Diese K-Faktoren stellen die gefilterten prozentualen Radgeschwindigkeitsabweichungen dar. Die K-Faktoren werden durch Division der Geschwindigkeit des langsamsten Rades ($v_{min}$) durch die Geschwindigkeit des jeweiligen Rades ($v_n$) gebildet.

Also

$$K_n = \frac{v_{min}}{v_n} \; ; n = 1,2,3,4$$

$$DIF = |K_1 - K_2|,$$

wobei die Geschwindigkeiten der Vorderräder mit $v_1$, $v_2$ bezeichnet sind.

Würden nur die beiden Vorderräder betrachtet, wäre die Information über die Differenz der Abrollumfänge natürlich bereits in einem prozentualen K-Faktor enthalten.

Erfindungsgemäß wird eine die Geradeausfahrt wiedergebende Bezugsgröße THR, siehe Fig. 1, gebildet und in Abhängigkeit von dem Verlauf der Differenzgröße DIF nach einem vorgegebenen Zeitraster oder Zeitschema fortlaufend korrigiert. Die Abweichung der Differenzgröße DIF von der fortlaufend korrigierten Bezugsgröße THR dient schließlich zur Kurvenfahrterkennung bzw. zur radiusunabhängigen Erkennung einer bestimmten Querbeschleunigung als Folge einer Kurvenfahrt.

Die Bezugsgröße THR, die gewissermaßen die Geradeausfahrt darstellt, wird im vorliegenden Ausführungsbeispiel mit Hilfe eines Zählers oder Registers (LN=Learn), siehe Fig. 2, korrigiert. Der Zähler wird gestartet, sobald die Fahrzeuggeschwindigkeit oder Fahrzeugreferenzgeschwindigkeit eine vorgegebene Schwelle von 30 km/h überschreitet. Ausgehend von einem Mittelwert wird der Zähler im Zähltakt erhöht oder erniedrigt, solange die Bezugsgröße THR von der Differenzgröße DIF abweicht. Festgestellt wird jeweils nur, ob eine Abweichung vorliegt und ob die Bezugsgröße THR größer oder kleiner als die Differenzgröße DIF ist. Der Arbeitstakt beträgt hier anfangs 224 ms . Der Zähler wird, wenn die Abweichung positiv oder negativ ist, inkrementiert bzw. dekrementiert, bis der Zähler seinen positiven oder negativen Endwert erreicht. Dies geschieht hier frühestens nach 128 Schritten oder 28 s . Beim Erreichen des Endwertes zum Zeitpunkt $t_1$ wird die Bezugsgröße THR um einen bestimmten Wert in Richtung auf eine Verminderung der Abweichung zwischen der Bezugsgröße THR und der Differenzgröße DIF korrigiert und der Zähler LN zurückgesetzt. Der beschriebene Vorgang wiederholt sich; zum Zeitpunkt $t_2$ wird die Bezugsgröße THR erneut korrigiert und der Zähler zurückgesetzt. Da nunmehr, d.h. nach $t_2$, die Abweichung der Differenzgröße DIF von der Bezugsgröße THR zeitweise negativ, zeitweise positiv ist, wird ein Endwert des Zählers, verbunden mit einer Korrektur des Bezugswertes THR und dem Zurücksetzen des Zählers LN, erst nach 190 s erreicht.

Fig. 3, für die ein anderer Zeitmaßstab als für Fig. 2 und Fig. 1 gilt, veranschaulicht, daß die Änderungsrate, mit der die Bezugsgröße THR nach Erreichen eines Endwertes des Zählers LN korrigiert wird, variabel ist. Anfangs, nach dem Ingangsetzen des Fahrzeuges, ist ein möglichst schnelles Erlernen bzw. Bilden der die Geradeausfahrt darstellenden Bezugsgröße erwünscht. Folglich ist anfangs die Änderungsrate hoch. Das Korrigieren bzw. Anheben oder Absenken des Bezugswertes THR erfolgt, solange die Anpassungsrichtung gleich bleibt, mit einer Änderungsrate von 0,4%. Nach einer Richtungsumkehr der Anpassung wird die Änderungsrate auf 0,2%, danach auf 0,1% gesenkt. Dieser kleinste Wert wird dann beibehalten. In den Beispielen in Fig. 3 liegt die Änderungsrate beim ersten und zweiten Erreichen des Zähler-Endwertes (Zähler LN), d.h. nach 28 s und (ungefähr) 1 min bei 0,4%, nach 1,5 min bei 0,2% und danach bei 0,1%

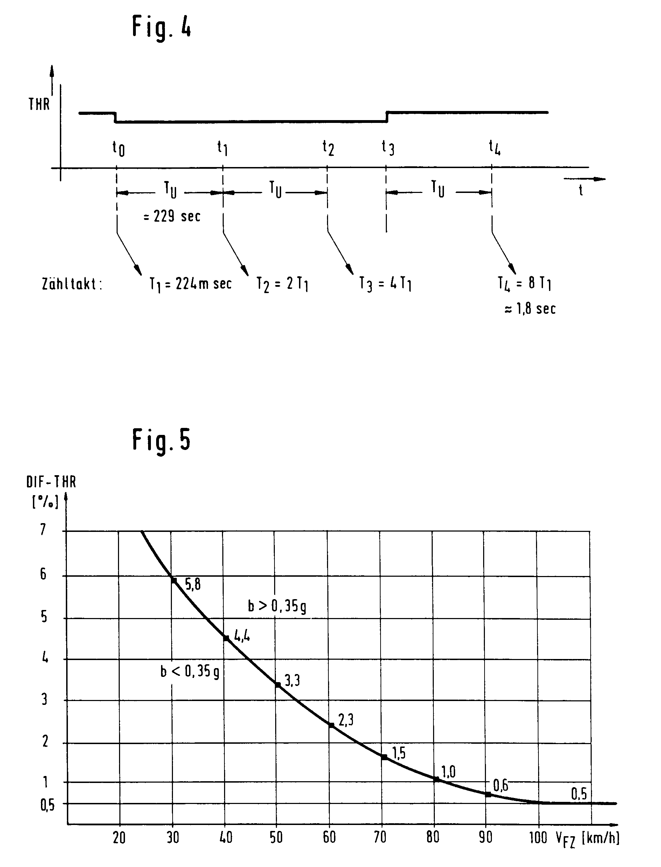

Fig. 4 veranschaulicht die Änderung der Zählrate des Zählers LN bei fortschreitender Fahrt. Anfangs, nach dem Anlassen des Fahrzeugmotors, beträgt die Zählrate $T_1=224$ ms. Ist bereits eine hohe Annäherung des Bezugswertes THR an die Differenzgröße DIF erreicht, so daß über eine vorgegebene längere Zeitspanne $T_U$ keine Korrektur des Bezugswertes THR festzustellen ist, wird die Zählrate von $T_1=224$ ms in mehreren Schritten mehrmals verdoppelt. Hierzu wird ein Zähler verwendet, der den Ablauf der vorgegebenen Zeitspanne $T_U$, die hier auf 229 s festgelegt ist, ermittelt. Die Zählrate wird durch die mehrfache Verdopplung der Basiszeitspanne von $T_1=224$ ms auf maximal (ungefähr) $T_4=1,8$ s erhöht. Der die vorgegebene Zeitspanne $T_U$ von 229 s erfassende Zähler wird, wie Fig. 4 zeigt, immer dann gestartet, wenn eine Korrektur der Bezugsgröße THR erfolgte. Die weitere Erhöhung der Zählrate, falls der Endwert von 1,8 s noch nicht erreicht ist, wird grundsätzlich nach dem Ablauf einer vollständigen Zeitspanne $T_U$ ausgelöst.

Das beschriebene Ausbilden der Bezugsgröße setzt deswegen erst oberhalb einer bestimmten Geschwindigkeit, z.B. 30 km/h ein, um zu verhindern, daß durch Einparkmanöver, lange Parkhausauffahrten usw. die Bezugsgröße auf einen durch die Kurvenfahrt, nicht durch die Geradeausfahrt, geprägten Wert verschoben wird. Dies würde zur einer Verzögerung des "Lernprozesses" bzw. der Korrektur der Bezugsgröße THR auf den realen Wert führen. Wird während der Fahrt die Geschwindigkeitsschwelle von 30 km/h zeitweise unterschritten, wird der "Lernprozeß" oder Zählprozeß, siehe Fig. 2, zeitweise angehalten und nach dem Überschreiten der Geschwindigkeitsschwelle wieder fortgesetzt.

Alle zuvor beschriebenen Maßnahmen, die durch geänderte Zeitraster, feinere Aufteilung des Zeitrasters usw. abgewandelt werden könnten, dienen dem generellen Ziel, die die Geradeausfahrt darstellende Bezugsgröße THR anfangs möglichst schnell zu korrigieren bzw. anzupassen und danach, wenn die gewonnenen Ergebnissen durch die längere Geradeausfahrt "sicherer" geworden sind, Änderungen bzw. Korrekturen nur noch in kleinen Schritten und sehr langsam zuzulassen.

Bei ABS-Bremsungen auf μ-split-Fahrbahnen ist es zur Vermeidung hoher Giermomente notwendig, den Druckaufbaugradienten an denjenigen Rädern abzuflachen, die sich auf dem höheren Reibbeiwert befinden. Diese Maßnahme wird Giermomentenbeeinflussung genannt.

Zur eigentlichen Kurvenfahrterkennung wird nun die prozentuale Geschwindigkeitdifferenz, die durch die Abweichung der Differenzgröße DIF von der fortlaufend korrigierten Bezugsgröße THR definiert ist, in Abhängigkeit von der Fahrzeuggeschwindigkeit ausgewertet. Die Kurvenfahrt wird dadurch radiusunabhängig bei einer konstanten Querbeschleunigung erkannt. Fig. 5 gibt den Zusammenhang für eine Querbeschleunigung von ca. 0,35 g wieder. Diese Querbeschleunigung ist im vorliegenden Beispiel ein Schwellwert für das Außerfunktionsetzen einer Giermomentenbeeinflussung. Eine Situation rechts der dargestellten Kennlinie wird als Kurvenfahrt erkannt und führt zur Abschaltung der Giermomentenbeeinflussung. Liegen die Meßwerte links der Kennlinie, handelt es sich um eine angenommene Geradeausfahrt.

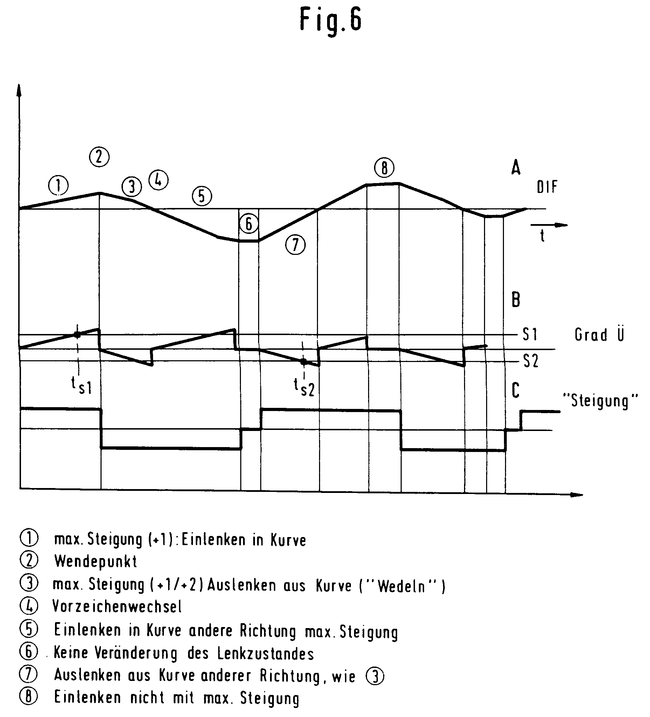

Durch die zuvor beschriebenen festen Zählraten und durch die Filterung der Signale kann es bei besonders schnellen Ein- und Auslenkvorgängen dazu kommen, daß der Regler die tatsächlich vorliegenden Verhältnisse nicht schnell genug erkennt, um die Regelung an diese Situation anpassen zu können. Um diesen Nachteil zu überwinden, ist ein zusätzlicher Zähler vorgesehen, welcher Ein- und Auslenkvorgänge durch eine Gradientenüberwachung der Differenzgröße DIF erkennt. Zur Erläuterung dieser Maßnahme dient Fig. 6.

Die Kennlinie (A) in Fig. 6 zeigt den Verlauf der Differenzgröße DIF bei schnellen Ein- und Auslenkvorgängen. Eine Gradientenüberwachung Grad Ü ist in der Fig. 6 (B) dargestellt. Das Erreichen der Schwellwerte S1 und S2 zum Zeitpunkt $t_{s1}$, $t_{s2}$ bedeutet eine "Einlenk-Erkennung" bzw. "Auslenk-Erkennung".

In einem Hilfsregister ("Steigung"), dessen Inhalt die Kennlinie (C) in Fig. 6 wiedergibt, wird die Steigung der Differenzbezugsgröße (DIF) festgehalten. Die mit Hilfe der Gradientenüberwachung Grad Ü gewonnenen Signale dienen zur Verbesserung der Regelung in solchen besonderen Situationen. Eine derartige Ein- Auslenkerkennung wird zweckmäßiger Weise der "normalen" Kurvenfahrterkennung bzw. Erkennung einer kritischen Querbeschleunigung, wie sie zuvor beschrieben wurde, überlagert.

Die einzelnen Abschnitte (1) bis (8) in Fig. 6 geben folgendes wieder:

Im oberen Diagramm (A) ist der Verlauf der Differenzgröße DIF in verschiedenen Situationen wiedergegeben. Im Anfangsbereich (1) deutet die konstante Steigung des Differenzwertes DIF auf ein Einlenken in eine Kurve nach vorangegangener Geradeausfahrt hin. Das Erreichen eines Schwellwertes S1 wird zum Erkennen des Einlenkens ausgewertet.

Das Maximum der Differenzgröße DIF, der Wendepunkt (2), wird erreicht, wenn das Einlenken beendet ist oder unterbrochen wird.

Der Bereich (3) gibt das Auslenken aus der Kurve wieder. Das Erreichen der Schwelle (S2) führt zum Erkennen des Auslenkens.

Im Bereich (4) ist das Auslenken beendet; es schließt sich ein Einlenken im Bereich (5) in eine Kurve anderer Richtung an. Die Differenzgröße DIF hat konstante Steigung.

Im Bereich (6) wird der Lenkzustand nicht verändert. Das Einlenken ist beendet. Es folgt im Abschnitt (7) ein Auslenken aus der Kurve. Schließlich (8) wird wieder eingelenkt, allerdings nicht mit maximaler Steigung; usw.

Mit Hilfe der Register "Grad Ü" und "Steigung" werden den gewonnen Informationen entsprechende Signale gebildet und dem Regler zur Auswertung zur Verfügung gestellt.

**Patentansprüche**

1. Verfahren zur Kurvenfahrterkennung, insbesondere für Kraftfahrzeuge mit Blockierschutz- und/oder Antriebsschlupfregelung,
   bei dem die Drehgeschwindigkeiten der beiden Räder einer Achse gemessen werden,
   bei dem fortlaufend unter Berücksichtigung der Geschwindigkeitsdifferenz der beiden Räder einer Achse und durch Filterung des Differenzwertes eine Korrekturgröße ermittelt und korrigiert wird und bei dem die Geschwindigkeitsdifferenz mit der momentanen Korrekturgröße verglichen und zur Kurvenfahrterkennung ausgewertet wird, dadurch **gekennzeichnet**,
   daß die Korrekturgröße eine die Geradeausfahrt wiedergebende Bezugsgröße (THR) ist und nach einem Zeitschema oder Zeitraster, dessen Schritte oder Zeitspannen ($T_K$) nach dem Starten des Zeitschemas bzw. Zeitrasters, relativ kurz sind und in Stufen oder kontinuierlich verlängert werden, korrigiert wird.

2. Verfahren nach Anspruch 1, dadurch **gekennzeichnet**, daß die Zeitspannen (n $T_K$), nach denen die Bezugsgröße (THR) korrigiert wird, anfangs in der Größenordnung zwischen 10 bis 50 s ($T_K$) und im Endzustand in der Größenordnung zwischen 40 s und 8 min. (n $T_K$)liegen.

3. Verfahren nach Anspruch 1 oder 2, dadurch **gekennzeichnet**, daß die Bezugsgröße (THR) mit vorgegebenen, variablen, prozentualen Änderungsraten korrigiert wird.

4. Verfahren nach Anspruch 3, dadurch **gekennzeichnet,** daß die Änderungsrate in mindestens drei zeitlich aufeinander folgenden Schritten variiert wird und anfangs im Bereich zwischen 0,2 % und 1%, vorzugsweise zwischen 0,3% und 0,4%, danach zwischen 0,1% und 0,5%, vorzugsweise zwischen 0,1% und 0,3%, und im übrigen zwischen 0,05% und 0,2%, vorzugsweise zwischen 0,1% und 0,15% des theoretisch maximalen Bezugswertes (THR) liegt.

5. Verfahren nach einem oder mehreren der Ansprüche 2-5, dadurch **gekennzeichnet,** daß die Mindestzeiten ($T_K$), nach deren Ablauf eine Korrektur des Bezugswertes (THR) möglich ist, erhöht werden, wenn innerhalb vorgegebener Zeitspannen ($T_U$) die Geschwindigkeitsdifferenzen klein sind bzw. keine Korrektur der Bezugsgröße (THR) erfolgte.

6. Verfahren nach einem oder mehreren der Ansprüche 2-5, dadurch **gekennzeichnet,** daß die prozentualen Änderungsraten ($\Delta THR_{1,2,3}$) verringert werden, wenn innerhalb vorgegebenen Zeitspannen ($T_U$) die Geschwindigkeitsdifferenzen klein sind bzw. keine Korrektur der Bezugsgröße (THR) erfolgte.

7. Verfahren nach einem oder mehreren der Ansprüche 1-6, dadurch **gekennzeichnet,** daß die Bezugsgröße (THR) mit Hilfe eines Zählers (LN), der ausgehend von einem Mittelwert die Abweichung der Geschwindigkeitsdifferenzen bzw. der Differenzgröße (DIF) von der Bezugsgröße (THR) erfaßt und, sobald die Abweichung einen Grenzwert (Zähler-Endwert) erreicht und/oder über eine vorgegebene Zeitspanne hinaus andauert, die Bezugsgröße (THR) um eine vorgegebenen prozentualen Wert in Richtung auf eine Verringerung der Abweichungen anhebt oder absenkt, gewonnen wird.

8. Verfahren nach Anpruch 7, dadurch **gekennzeichnet,** daß der Inhalt des Zählers (LN), solange die Abweichung der Geschwindigkeitsdifferenzgröße (DIF) von der Bezugsgröße (THR) gleiche Richtung besitzt, im Zähltakt (z) erhöht bzw. erniedrigt wird und daß bei Erreichen des oberen bzw. unteren Zähler-Endwertes die Bezugsgröße (THR) korrigiert wird.

9. Verfahren nach Anspruch 7, dadurch **gekennzeichnet,** daß die Zählgeschwindigkeit des Zählers (LN) variabel ist und ausgehend von einem anfangs

relativ schnellen Takt ($T_1$) mehrmals halbiert wird ($T_2$, $T_3$, $T_4$).

10. Verfahren nach einem oder mehreren der Ansprüche 1-9, dadurch **gekennzeichnet,** daß die Kurvenfahrterkennung durch das Betätigen der Zündung des Kraftfahrzeugmotors gestartet wird.

11. Verfahren nach einem oder mehreren der Ansprüche 1-10, dadurch **gekennzeichnet,** daß die Kurvenfahrterkennung erst nach Überschreiten eines Schwellwertes der Fahrzeugsgeschwindigkeit ($v_{FZ}$) ausgewertet wird.

12. Verfahren nach Anspruch 11, dadurch **gekennzeichnet,** daß ein Geschwindigkeitsschwellenwert im Bereich zwischen 20-40 km/h gewählt wird.

13. Verfahren nach einem oder mehreren der Ansprüche 1-12, dadurch **gekennzeichnet,** daß bei einem Fahrzeug mit Vorderrad- oder Hinterradantrieb das Drehverhalten der nicht angetriebenen Räder ausgewertet wird.

14. Verfahren nach einem oder mehreren der Ansprüche 1-12, dadurch **gekennzeichnet,** daß bei einem Fahrzeug mit Allradantrieb das Drehverhalten derjenigen Räder einer Achse, die weniger von dem Antrieb beeinflußt werden, ausgewertet wird.

15. Verfahren nach einem oder mehreren der Ansprüche 1-14, dadurch **gekennzeichnet,** daß eine oder mehrere zusätzliche Speicher (Grad Ü, "Steigung") verwendet werden, die die Änderung der Geschwindigkeitsdifferenzgröße (DIF) bzw. des Gradienten der Geschwindigkeitsdifferenzgröße erfassen und zum schnellen Erkennen von Einlenk- und Auslenkvorgängen, von schnellen Lenk-Wechselvorgängen ("Wedeln")usw. dienen.

16. Verfahren nach einem oder mehreren der Ansprüche 1-15, dadurch **gekennzeichnet,** daß das die Fahrzeuggeschwindigkeit oder Fahrzeugreferenzgeschwindigkeit ($v_{FZ}$) mit der Geschwindigkeit der zur Kurvenfahrterkennung überwachten Räder verglichen wird und daß die Auswertung der Kurvenfahrterkennung unterbrochen wird, sobald die Differenz zwischen der Fahrzeug(referenz)geschwindigkeit und dem langsameren Rad einen vorgegebenen Grenzwert überschreitet, und daß der zu diesem Zeitpunkt ermittelte Status der Kurvenfahrterkennung als konstant angenommen wird.

17. Verfahren nach einem oder mehreren der Ansprüche 1-16, dadurch **gekennzeichnet,** daß beim Einsetzen einer Blockierschutz- oder Antriebschlupfregelung der bis zu diesem Zeitpunkt ermittelte Status der Kurvenfahrterkennung als konstant angenommen wird.

## Claims

1. A cornering identification method provided, in particular, for automotive vehicles with anti-lock and/or traction slip control, measuring the rotating velocities of the two wheels of one axle, continuously detecting and correcting a correction value by taking into account the velocity difference of the two wheels of one axle and by filtering the difference value, comparing the velocity difference with the momentary correction value and evaluating it for cornering identification,
**characterized** in that the correction value is a reference value (THR) representative of a straight-line course, and is corrected in accordance with a time pattern or time grid, having steps or periods ($T_K$) which are relatively short after the start of the time pattern or time grid and will be prolonged stepwise or continuously.

2. A method as claimed in claim 1,
**characterized** in that the periods ($n\ T_K$), in accordance with which the reference value (THR) is corrected, lie in the order of magnitude ranging between 10 and 50 seconds ($T_K$) at the beginning and in the order of magnitude ranging between 40 seconds and 8 minutes ($n\ T_K$) in a final state.

3. A method as claimed in claim 1 or claim 2,
**characterized** in that the reference value (THR) is corrected by means of predetermined, variable, percentage rates of change.

4. A method as claimed in claim 3,
**characterized** in that the rate of change is varied in at least three subsequent steps and, at the beginning, ranges between 0.2% and 1%, preferably between 0.3% and 0.4%, thereupon lying between 0.1% and 0.5%, preferably between 0.1% and 0.3%, and for the rest lying between 0.05% and 0.2%, preferably between 0.1% and 0.15%, of a theoretically maximum reference value (THR).

5. A method as claimed in one or in several of claims 2 through 4,
**characterized** in that the minimum times ($T_K$), after the expiration of which correction of the reference value (THR) is possible, will be increased if, within predetermined periods ($T_U$), the velocity differences are small or no correction of reference value (THR) took place.

6. A method as claimed in one or in several of claims 2 through 5,
**characterized** in that the percentage rates of change (delta $THR_{1,2,3}$) will be reduced if, within predetermined periods ($T_U$), the velocity differences are small or no correction of reference value (THR) took place.

7. A method as claimed in one or in several of claims 1 through 6,
   **characterized** in that the reference value (THR) is obtained by means of a counter (LN) which, starting from a mean, registers a deviation of the velocity differences or of the difference value (DIF) from the reference value (THR) and, as soon as the deviation reaches a limit value (terminal counter value) and/or persists beyond a predetermined period, will increase or decrease the reference value (THR) by a predetermined percentage value in the direction of a reduction of the deviations.

8. A method as claimed in claim 7,
   **characterized** in that, as long as the deviation of the velocity difference value (DIF) from the reference value (THR) has the same direction, the contents of the counter (LN) will be increased or decreased at a rate of the counting cycle (z) and in that correction of the reference value (THR) will take place when an upper or lower terminal value of the counter is reached.

9. A method as claimed in claim 7,
   **characterized** in that a counting speed of the counter (LN) is variable and, starting from a relatively fast cycle ($T_1$) at the beginning, is halved several times ($T_2$, $T_3$, $T_4$).

10. A method as claimed in one or in several of claims 1 through 9,
    **characterized** in that cornering identification is started by operating an ignition of an engine of the automotive vehicle.

11. A method as claimed in one or in several of claims 1 through 10,
    **characterized** in that cornering identification will not be evaluated before a threshold value of vehicle velocity ($v_{FZ}$) will have been exceeded.

12. A method as claimed in claim 11,
    **characterized** in that a velocity threshold value is selected which ranges between 20 and 40 km/hr.

13. A method as claimed in one or in several of claims 1 through 12,
    **characterized** in that, in a vehicle with front wheel drive or rear wheel drive, the rotational behaviour of the non-driven wheels is evaluated.

14. A method as claimed in one or in several of claims 1 through 12,
    **characterized** in that, in an all-wheel drive vehicle, rotational behaviour of the wheels of one axle is evaluated which are less influenced by the drive.

15. A method as claimed in one or in several of claims 1 through 14,
    **characterized** in that one or several additional memories (Grad U; "gradient") are used which register the change of respectively the velocity difference value (DIF) or of the gradient of the velocity difference value and serve the fast identification of steering-in and steering-out operations, of quick steering changes, etc.

16. A method as claimed in one or in several of claims 1 through 15,
    **characterized** in that vehicle velocity or vehicle reference velocity ($v_{FZ}$) is compared with the velocity of the wheels monitored for cornering identification and in that the evaluation of cornering identification will be interrupted as soon as the difference between the vehicle (reference) velocity and a slower wheel exceeds a predetermined limit value, and in that the status of cornering identification detected until this time is considered constant.

17. A method as claimed in one or in several of claims 1 through 16,
    **characterized** in that, upon the onset of anti-lock control or traction slip control, the status of cornering identification detected until this time is considered constant.

## Revendications

1. Procédé de reconnaissance d'engagement dans un virage, notamment pour véhicule automobile à régulation antiblocage et/ou régulation du glissement de traction, selon lequel les vitesses de rotation des deux roues d'un essieu sont mesurées, une grandeur de correction est, d'une manière continue, déterminée et corrigée en tenant compte de la différence de vitesse des deux roues d'un essieu et par filtrage de la valeur de différence, et la différence de vitesse est comparée à la grandeur de correction momentanée et est exploitée pour la reconnaissance d'engagement dans un virage, caractérisé en ce que la grandeur de correction est une grandeur de référence (THR) traduisant la conduite en ligne droite et en ce qu'elle est corrigée conformément à un schéma temporel ou schéma à tranches de temps dont les pas ou intervalles de temps (Tk) sont relativement courts à la suite du lancement du schéma temporel ou schéma à tranches de temps et sont allongés d'une manière étagée ou continue.

2. Procédé selon la revendication 1, caractérisé en ce que les intervalles de temps (n Tk), à la suite desquels la grandeur de référence (THR) est corrigée, sont au début de l'ordre d'une valeur comprise entre 10 et 50 s (Tk) et sont, dans la situation finale, de l'ordre d'une valeur comprise entre 40 s et 8 min (n Tk).

3. Procédé selon la revendication 1 ou 2, caractérisé en ce que la grandeur de référence (THR) est corrigée à des taux de variation en pour cent qui sont variables et préfixés.

4. Procédé selon la revendication 3, caractérisé en ce qu'on fait varier le taux de variation en au moins trois pas se succédant dans le temps et en ce qu'il est au début situé dans l'intervalle compris entre 0,2% et 1%, de préférence entre 0,3% et 0,4%, puis entre 0,1% et 0,5%, de préférence entre 0,1% et 0,3%, et, pour le reste, entre 0,05% et 0,2%, de préférence entre 0,1% et 0,15%, de la valeur de référence maximale théorique (THR).

5. Procédé selon une ou plusieurs des revendications 2-5, caractérisé en ce que les temps minimales (Tk) à la suite de l'écoulement desquels une correction de la valeur de référence (THR) est possible sont augmentés lorsqu'à l'intérieur d'intervalles de temps ($T_U$) préfixés, les différences de vitesse sont petites, ou aucune correction de la grandeur de référence (THR) n'a eu lieu.

6. Procédé selon une ou plusieurs des revendications 2-5, caractérisé en ce que les taux de variation en pour cent ($DTHR_{1,2,3}$) sont réduits lorsqu'à l'intérieur d'intervalles de temps ($T_U$) préfixés, les différences de vitesse sont petites, ou aucune correction de la grandeur de référence (THR) n'a eu lieu.

7. Procédé selon une ou plusieurs des revendications 1-6, caractérisé en ce que la grandeur de référence (THR) est obtenue au moyen d'un compteur (LN) qui, en partant d'une valeur moyenne, détecte l'écart des différences de vitesse, ou de la grandeur de différence (DIF), vis-à-vis de la grandeur de référence (THR) et qui, dès que l'écart atteint une valeur limite (valeur extrême de compteur) et/ou dure au-delà d'un intervalle de temps préfixé, augmente ou abaisse la grandeur de référence (THR), d'une valeur en pour cent préfixée, dans le sens tendant à réduire les écarts.

8. Procédé selon la revendication 7, caractérisé en ce qu'aussi longtemps que l'écart de la grandeur de différence de vitesse (DIF) vis-à-vis de la grandeur de référence (THR) a le même sens, le contenu du compteur (LN) est augmenté ou diminué à une cadence de comptage (z) et en ce que la grandeur de référence (THR) est corrigée lorsque la valeur extrême de compteur respectivement supérieure ou inférieure est atteinte.

9. Procédé selon la revendication 7, caractérisé en ce que la vitesse de comptage du compteur (LN) est variable et est divisée par deux plusieurs fois ($T_2$, $T_3$, $T_4$) en partant d'une cadence au début relativement rapide ($T_1$).

10. Procédé selon une ou plusieurs des revendications 1-9, caractérisé en ce que la reconnaissance de conduite en courbe est lancée par l'actionnement de l'allumage du moteur du véhicule automobile.

11. Procédé selon une ou plusieurs des revendications 1-10, caractérisé en ce que ce n'est qu'une fois qu'une valeur de seuil de la vitesse de véhicule ($v_{FZ}$) a été franchie vers le haut que la reconnaissance de conduite en courbe est exploitée.

12. Procédé selon la revendication 11, caractérisé en ce qu'une valeur de seuil de vitesse est choisie dans l'intervalle compris entre 20-40 km/h.

13. Procédé selon une ou plusieurs des revendications 1-12, caractérisé en ce que, dans le cas d'un véhicule à traction avant ou à traction arrière, c'est le comportement en rotation des roues non motrices qui est exploité.

14. Procédé selon une ou plusieurs des revendications 1-12, caractérisé en ce que, dans le cas d'un véhicule à traction sur toutes les roues, c'est le comportement en rotation des roues d'un essieu qui subissent l'influence la plus faible de la traction qui est exploité.

15. Procédé selon une ou plusieurs des revendications 1-14, caractérisé en ce qu'on utilise une ou plusieurs mémoires supplémentaires (qualité Ü, "pente") qui enregistrent la variation de la grandeur de différence de vitesse (DIF), ou du gradient de la grandeur de différence de vitesse, et qui servent à une reconnaissance rapide d'opérations de braquage vers l'intérieur et de braquage vers l'extérieur, d'opérations de changement rapide d'orientation de la direction ("mouvement alterné"), etc..

16. Procédé selon une ou plusieurs des revendications 1-15, caractérisé en ce que la vitesse de véhicule ou vitesse de référence de véhicule ($v_{FZ}$) est comparée à la vitesse des roues surveillées pour la reconnaissance d'engagement dans un virage et en ce que l'exploitation de la reconnaissance d'engagement dans un virage est interrompue dès que la différence entre la vitesse (de référence) de véhicule et la roue la plus lente franchit vers le haut une valeur limite préfixée et en ce que l'état de la reconnaissance d'engagement dans un virage qui est relevé à cet instant est considéré comme constant.

**17.** Procédé selon une ou plusieurs des revendications 1-16, caractérisé en ce que, lors de la mise en service d'une régulation antiblocage ou d'une régulation du glissement de traction, le statut de la reconnaissance de conduite en courbe qui est relevé à cet instant est considéré comme constant.

# Fig.1

DIF

THR

Δt = z

$t_1$        $t_2$        $t_3$

t [sec]

$T_K = 28$    $T_K = 28$    $T_{K1} = 190$

# Fig.2

LN

$t_1$      $t_2$      $t_3$

t [sec]

$T_K$    $T_K$    $T_{K1}$

# Fig.3

THR
[%]

0,8

0,4

0

$\Delta THR_2$

$\Delta THR_3$

$\Delta THR_1$

0,5   1     2     3

(28sec)

t [min]

# Fig. 4

Zähltakt: $T_1 = 224$ m sec    $T_2 = 2 T_1$    $T_3 = 4 T_1$    $T_4 = 8 T_1$
$\approx 1,8$ sec

# Fig. 5

# Fig.6

① max. Steigung (+1): Einlenken in Kurve
② Wendepunkt
③ max. Steigung (+1/+2) Auslenken aus Kurve ("Wedeln")
④ Vorzeichenwechsel
⑤ Einlenken in Kurve andere Richtung max. Steigung
⑥ Keine Veränderung des Lenkzustandes
⑦ Auslenken aus Kurve anderer Richtung, wie ③
⑧ Einlenken nicht mit max. Steigung